# EUROPEAN PATENT SPECIFICATION

(11) **EP 0 792 326 B1**
(45) Date of publication and mention of the grant of the patent: **09.02.2000**
(21) Application number: 95937792.0
(22) Date of filing: 13.11.1995
(51) Int. Cl.: C09D 5/16

(54) **ANTIFOULING PAINT COMPOSITION**
FÄULNISVERHINDERNDE ANSTRICHZUSAMMENSETZUNG
COMPOSITION DE PEINTURE ANTISALLISURE

(30) Priority: 14.11.1994 EP 94610051
(43) Date of publication of application: 03.09.1997
(60) Divisional application: 99112529.5
(73) Proprietor: J.C. HEMPEL'S SKIBSFARVE-FABRIK A/S, DK-2800 Lyngby (DK)
(72) Inventor: URBAN, Claus, DK-2000 Frederiksberg C (DK); CODOLAR, Santiago, Arias, E-08015 Barcelona (ES); ELBRO, Helle, Simon, DK-2770 Kastrup (DK); SCHULTZ, Ann, Christina, DK-4000 Roskilde (DK)
(74) Representative: Plougmann, Vingtoft & Partners A/S
(86) International application number: DK9500450
(87) International publication number: WO9615198

(56) References cited:
- WO-A-90/06968
- US-A- 4 064 307
- US-A- 4 881 976
- DATABASE WPI Section Ch, Week 9250 Derwent Publications Ltd., London, GB; Class A18, AN 92-410453 XP002000949 & JP,A,04 306 269 ( D & D KK) , 29 October 1992

## Description

### FIELD OF THE INVENTION

The present invention relates to aquatic structures, in particular immersed marine structures, having an external antifouling coating on the part of the structure expected to be immersed in water, as well as antifouling paint compositions that prevent unwanted fouling organisms from attaching and growing on immersed structures that come in contact with water, especially sea water, for example vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, underwater oil well structures, nets and other aquatic culture installations, and buoys etc.

### BACKGROUND OF THE INVENTION

On underwater structures and on ship's hulls which are exposed to sea and/or fresh water, attachment and growth of marine organisms such as green algae, such as *Enteromorpha spp.* and *Ulva spp.,* diatoms, such as *Amphora spp.,* tubeworms, barnacles such as *Balanus spp.,* ascidians, sponges, hydroids etc. cause severe economic losses because of the increased friction (and therefore increased consumption of fuel), or increased resistance to waves or currents (for static structures such as off-shore rigs), and because of decreased un-docking time.

In order to solve the fouling problem several antifouling paint technologies have been developed. Some technologies are based on the principle of incorporating biologically active agents into the paint. However, in order to obtain a satisfactory incorporation and a proper release control of the biologically active agents, the mechanical properties of the antifouling paint, *e.g.* the mechanical strength of the paint and the ability of the paint to adhere to other paints, may be impaired.

Another antifouling paint technology that has been investigated for a number of years, is the use of self-polishing antifouling paint compositions in which the polymer of the binder system is a trialkyltin derivative of a polymer containing carboxylic acid groups in the monomer segments, the alkyltin groups being situated on the carboxylic acid groups. However, the increasing problem of pollution with tin compounds in, *e.g.,* harbours has led to intensive research efforts to provide tin-free self-polishing antifouling paints.

The search for binder systems for tin-free self-polishing antifouling paints, on the one hand having inherent self-polishing properties and exhibiting good capabilities for incorporation of biologically active agents, and on the other hand being able to convey a good mechanical strength of the paint film, has so far been a difficult task.

One way of obtaining binder systems for antifouling paints, such as for tin-free self-polishing antifouling paints, is to employ substances such as rosin or rosin equivalents as part of the binder system. Rosin or rosin equivalents has a number of highly desirable properties for use in antifouling paints; due to its water solubility it is capable of releasing biologically active agents into the water at a controlled rate. Also, it is compatible with a large number of binder components; this facilitates the formulation of a final coating product. Furthermore, it is readily available, relatively cheap and originates from a self-renewable natural source. In principle, the water solubility gives the opportunity of obtaining a high polishing rate in a rosin-containing paint if a high proportion of rosin or rosin equivalent is incorporated. However, inclusion of a high proportion of rosin or rosin equivalents in order to ensure a polishing rate optimal for practical purposes leads to an antifouling paint having severe mechanical deficiencies, such as cracking tendencies and poor resistance to weathering.

Therefore, due to the inherent mechanical deficiencies of such self-polishing binder systems, their polishing properties can not be fully expressed.

### SUMMARY OF THE INVENTION

The present invention provides a marine antifouling paint comprising a binder system and preferably at least one biologically active agent, the binder system being present in the paint in such an amount and having such a composition that the paint would tend to crack or otherwise be mechanically weak in the absence of any principle counteracting such deficiency, the paint further containing fibres which, when incorporated in the paint, result in a reinforcement of the mechanical properties. Thus, the invention relates to a marine antifouling paint comprising a binder system, the binder system being present in the paint in such an amount and having such a composition that the paint
when tested in the Free Film Elongation Test herein results in a ranking of 0, or
when tested in the Laboratory Cracking Test herein results in a ranking of below 5, or
when tested in the Atmospheric Cracking Test herein after exposure to weathering for 3 months results in a ranking of below 4, or
when tested in the Steel Panel Elongation Test herein shows micro or macro cracking when elongated 4 mm, or
when tested in the Mandrel Test herein shows failure when using a mandrel having a diameter of 20 mm, or
when tested in the Direct Impact Test herein shows failure when hit by the standard weight dropped from a height of 40 cm;
in the absence of any principle counteracting the mechanical deficiency, the paint further containing fibres which, when incorporated in Model Paint A (as described in Example 1 and tested in the Laboratory Cracking Test herein), result in a cracking ranking of the Model Paint A at least 1 rating unit higher than the cracking ranking of the Model Paint A without the fibres.

### DETAILED DESCRIPTION OF THE INVENTION

The marine antifouling paint according to the present invention is preferably a self-polishing antifouling paint.

In a preferred embodiment the marine antifouling paint according to the invention is a marine antifouling paint comprising a hydrophilic binder system and preferably at least one biologically active agent, said binder system having such a composition that the paint would tend to crack or otherwise be mechanically weak, however, this deficiency being partly or fully repaired by the incorporation of the fibres.

In a further preferred embodiment the marine antifouling paint according to the invention is a marine antifouling paint comprising as part of the binder system a rosin or rosin equivalent and preferably at least one biologically active agent, said binder system having incorporated such an amount of rosin or rosin equivalent that the paint would tend to crack or otherwise be mechanically weak, however, this deficiency being partly or fully repaired by the incorporation of the fibres.

The present invention provides an antifouling paint which can contain a high proportion of a polishing binder system, preferably containing rosin or a rosin equivalent as part of the binder system, such as a proportion of 15% by solids volume of the paint or even more, such as up to 80% solids volume of the paint, but which, at the same time, has satisfactory mechanical properties which render it realistic to employ such paint for normal and even demanding antifouling paint purposes, such as being exposed to sunlight for prolonged periods of time, or being exposed to cycles of immersion/sunlight exposure as it happens in the water line of a ship.

Thus, the invention makes it possible to utilise the desired beneficial properties of rosin and rosin equivalents in antifouling paints, and to increase the content of rosin or rosin equivalents, with full or substantially full retainment of the crucial antifouling properties of the paints, and even enhancement of the antifouling properties due to the incorporation of higher amounts or rosin and/or rosin equivalent(s). This was genuinely surprising, as it would have been believed that the incorporation of fibres in amounts which could be of any use with respect to improvement of the mechanical properties of the paint would, at the same time, significantly reduce the polishing properties and impair the antifouling performance to a considerable extent.

In the present context, the terms "self-polishing" and "polishing" are intended to mean that the coating in question, under the test conditions described in the Polishing Rate Test herein, is subject to a reduction of the thickness of the coating of at least 1 µm per 10,000 Nautical miles (18,520 km) of relative movement between the coated surface and the surrounding aqueous medium due to removal of coating material from the surface of the coating.

In the present context the term "mechanically weak" relates to a paint which, when tested in the Free Film Elongation Test herein, is given a stress value of 0.

Alternatively, mechanical weakness or deficiency of a paint can also be identified by testing the paint in one of the other tests described herein. E.g. in the Laboratory Cracking Test a rating of below 5 indicates that the paint in question is mechanically weak or has mechanical deficiencies. The same applies for a paint given a rating of below 4 in the Atmospheric Cracking Test when exposed to weathering for 3 months; a paint tested in the Steel Panel Elongation Test herein showing micro or macro cracking when elongated 4 mm; a paint tested in the Mandrel Test herein showing failure when using a mandrel having a diameter of 20 mm; or tested in the Direct Impact Test herein showing failure when hit by the standard weight dropped from a height of 40 cm.

In the present context the term "marine" relates to any kind of aqueous environment such as salt, brackish or fresh water. The term "immersed" relates to structures being contacted with such a marine environment.

In the present context the term "% by solids volume" is intended to mean the volume/volume percentage of the dry matter of the paint.

In the present context the term "water soluble fibres" is intended to mean that the fibres as a major constituent comprise a material which has a water solubility of at least about 1 mg/kg at 25°C as determined by ASTM Designation E 1148. Non-limiting examples of such water soluble fibres are zinc oxide fibres, polyvinylalcohol fibres, protein fibres, acrylic acid fibres, cellulose fibres. etc. When water soluble fibres are incorporated in self-polishing paint coatings, the surface of the paint coating containing water-soluble fibres may be smoother than that of a coating containing water insoluble fibres, in that the binder components as well as the fibres are eroded away simultaneously.

The fibres for use in the invention may, in principle, be any fibre which is capable of being incorporated in an antifouling paint having mechanical deficiencies, but preferably, the fibres are fibres which will improve the mechanical strength of an antifouling paint tested in the Laboratory Cracking Test herein. More preferably, the fibres are capable of being incorporated in an antifouling paint composition comprising a hydrophilic binder system such as a binder system having a high content of rosin or rosin equivalent(s).

In the present context the term "fibres" is intended to mean any fibres within the groups of inorganic fibres, natural organic fibres, synthetic organic fibres, and metallic fibres. Furthermore, the term "fibres" is intended to cover monofilaments, split fibres, and stable fibres of any cross section. Thus, the term also comprises flakes, bands, needles, whiskers, and strips. The fibres may or may not have been surface treated or coated.

Examples of inorganic fibres are carbide fibres such as silicon carbide fibres, boron carbide fibres, niobium carbide fibres; nitride fibres such as silicon nitride fibres; boron containing fibres such as boron fibres, boride fibres; silicon-containing fibres such as silicon fibres, alumina-boron-silica fibres, E-glass (non-alkaline alumoborosilicate) fibres, C-glass (non-alkaline or low-alkaline soda lime-alumoborosilicate) fibres, A-glass (alkaline soda lime-silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, wollastonite fibres, potassium aluminium silicate fibres; metal fibres such as iron fibres, aluminium fibres, bismuth fibres, antimony fibres, wolfram fibres, molybdenum fibres, chrome fibres, copper fibres, germanium fibres, rhodium fibres, beryllium fibres, and metal alloy fibres thereof such as bronze fibres, aluminium-nickel alloy fibres, copper-tin alloy fibres, steel fibres; oxide fibres such as zirconia fibres, alumina fibres, magnesia fibres, zinc oxide fibres, indium oxide fibres, titanium oxide fibres, beryllium oxide fibres, nickel oxide fibres, thorium oxide fibres, yttrium oxide fibres, potassium titanate fibres; carbon fibres such as pure carbon fibres, graphite fibres, slagwool fibres, charcoal fibres; sulphide fibres such as zinc sulphide fibres, cadmium sulphide fibres; phosphate fibres such as hydroxyapatite fibres, calcium hydrogenphosphate (brushite) fibres, neodymium pentaphosphate fibres, and silver phosphate fibres; calcium sulphate fibres; tin iodide fibres; calcium iodate fibres; calcium fluoride fibres; mica fibres such as muscovite fibres, phlogopite fibres, biotite fibres; sodium aluminium hydroxycarbonate fibres; rockwool fibres such as pure rockwool fibres and basalt rockwool fibres; processed mineral fibres from mineral wool; montmorillonite fibres; atapulgite fibres; calcined bauxite fibres; etc.; modified by any chemical or physical processes; and any mixture thereof.

Examples of natural and synthetic organic fibres are aromatic polyamide fibres such as poly(*p*-benzamide) fibres, poly(p-phenylene-terephthalamide) fibres, poly(*p*-phenylene-2,6-naphthalamide) fibres, poly(3,4'-diphenylether-terephthalamide) fibres, poly(*p*-phenylene-(*p*-benzamide)-terephthalamide) fibres, poly(*p*-benzhydrazide terephthalamide) fibres, poly(*m*-phenylene-isophthalamide) fibres, poly(N,N'-m-phenylene-bis(*m*-benzamide)-terephthalamide) fibres, poly(N,N'-*m*-phenylene-bis(*m*-benzamide)-2,6-naphthalamide) fibres, poly(N,N'-*m*-phenylene-bis(m-benzamide)-4,4'-biphenyl-dicarboxamide) fibres, poly(4,4'-bis(*p*-aminophenyl)-2,2'-bithiazole-isophthalamide) fibres, poly(2,5-bis(*p*-aminophenyl)-1,3,4-oxa-diazole-isophthalamide) fibres, poly(4,4'-diaminobenzanilide-isophthalamide) fibres, poly(2-methyl-*p*-phenylene-2,6-naphthalamide) fibres, poly(2,6-dichloro-*p*-phenylene-2,6-naphthalamide) fibres; aromatic polyhydrazide fibres such as poly(terephthalic-*m*-phenylene-hydrazide) fibres, poly(terephthalic-hydrazide) fibres, poly(*p*-phenylene-*N*-methyl-hydrazide) fibres; aromatic polyester fibres such as poly(chloro-1,4-phenylene-ethylene-dioxy-4,4'-benzoate-co-terephthalate) fibres, poly(chloro-1,4-phenylene-4,4'-oxydibenzoate) fibres, poly(methyl-1,4-phenylene-4,4'-oxydibenzoate) fibres, poly(chlorophenylene-hexahydroterephthalate) fibres; aromatic polyazomethine fibres such as poly(nitrilo-(2-methyl-1,4-phenylene)nitrilomethylidyne-1,4-phenylenemethylidyne) fibres; aromatic polyimide fibres such as aromatic polypyromellitimide fibres, aromatic polytrimellitimide fibres, polyester-imide fibres, poly(4,4'-diphenyl-ether-pyromellitimide) fibres; aromatic heterocyclic polymeric fibres such as polybenzimidazole fibres such as poly-(2,2'-(*m*-phenylene)-5,5'-bibenzimidazole) fibres, polybenzothiazole fibres such as poly(2-(1,4-phenylene)-2'-(6,6'-bibenzothiazole)) fibres and poly(2-(1,3-phenylene)-2'-(6,6'-bibenzothiazole)) fibres, polybenzoxazole fibres such as poly((1,7-dihydrobenzo(1,2-d:4,5-*d*')dioxazole-2,6-diyl)-1,4-phenylene) fibres and poly((benzo(1,2-d:4,5-*d*')bisoxazol-2,6-diyl)-1,4-phenylene) fibres, polyoxadiazole fibres such as polyarylene-1,3,4-oxadiazole fibres; cellulose fibres such as α-cellulose fibres, β-cellulose fibres, mineral cellulose fibres, methylcellulose fibres, cellucotton fibres, regenerated cellulose (rayon) fibres, cellulose acetate fibres, jute fibres, cotton fibres, linen fibres, ramie fibres, sisal fibres, heme fibres, flax fibres, cyanoethylated cellulose fibres, acetylated cellulose fibres; wood fibres such as pine, spruce and fir wood fibres, lignin fibres and fibres of lignin derivatives; rubber fibres and fibres of derivatives of rubber; polyolefin fibres such as polyethylene fibres, polypropylene fibres, polytetrafluoroethylene fibres, polybutadiene fibres; polyacetylene fibres; polyester fibres; acrylic fibres and modified acrylic fibres such as acrylic acid fibres, styrol/acrylate fibres; acrylonitrile fibres such as acrylonitrile fibres and polyacrylonitrile fibres; elastomeric fibres; protein fibres such as casein fibres, maize protein fibres, soybean protein fibres, groundnut protein fibres; alginate fibres; poly(ethylene terephthalate) fibres; polyvinyl alcohol fibres; aliphatic polyamide fibres such as nylon fibres e.g. nylon 6.6 fibres, nylon 6 fibres, nylon 6.10 fibres; poly(phenylene sulphide) fibres; polyvinylchloride fibres; polychloroethene fibres; poly(bisbenzimidazobenzophenanthrolin) fibres; polyoxymethylene fibres; polyurethane fibres; vinyl polymeric fibres; viscose fibres; etc.; modified by any chemical or physical processes; and any mixture thereof.

Preferred examples of fibres are silicon-containing fibres; metal fibres; oxide fibres; carbon fibres; rockwool fibres; processed mineral fibres from mineral wool; montmorillonite fibres; atapulgite fibres; calcined bauxite fibres; aromatic polyamide fibres; aromatic polyester fibres; aromatic polyimide fibres; cellulose fibres; wood fibres; rubber fibres and fibres of derivatives of rubber; polyolefin fibres; polyacetylene fibres; polyester fibres; acrylic fibres and modified acrylic fibres; acrylonitrile fibres; elastomeric fibres; protein fibres; alginate fibres; poly(ethylene terephthalate) fibres; polyvinyl alcohol fibres; aliphatic polyamide fibres; polyvinylchloride fibres; polyurethane fibres; vinyl polymeric fibres; and viscose fibres; modified by any chemical or physical processes; and any mixtures thereof.

Especially preferred fibres are E-glass (non-alkaline alumoborosilicate) fibres; C-glass (non-alkaline or low-alkaline soda lime-alumoborosilicate) fibres; mineral-glass fibres; wollastonite fibres; potassium aluminium silicate fibres; metal oxide fibres; rockwool fibres; processed mineral fibres from mineral wool; calcined bauxite fibres and bauxite fibres; aromatic polyamide fibres; aromatic polyester fibres; cellulose fibres; wood fibres; rubber fibres and fibres of derivatives of rubber; polyolefin fibres; polyacetylene fibres; polyester fibres; acrylonitrile fibres; aliphatic polyamide fibres; and polyvinylchloride fibres; ceramic fibres; silicone fibres, and aramide fibres; modified by any chemical or physical processes; and any mixtures thereof.

The surface of the fibres may or may not have been modified by chemical or physical processes. Examples of such modification processes used to improve the beneficial effects of the fibres are carbonization; silylation; etching such as treatment with alkalimetal hydroxide, treatment with hydrofluoric acid; coating; polyelectrolytic entrapment in the porous surface structures; adsorption processes; hydrogen-bonding processes; esterification processes; cationic bonding processes; anionic bonding processes; polymerisation processes; cross-linking processes; etc. as well as any modification processes included in the manufacturing of the fibres.

The preferred fibres for use according to the invention seem to be fibres which are considerably coarser than fibre-products previously used as fillers or paint additives in antifouling paints. While the present invention is not to be limited to any particular theory, it is believed that even a relatively low volume concentration of such rather coarse fibres will be able to counteract microcracking during the early phases of the drying/hardening of the paint, and that the thus lower concentration of microcracks permit the relatively low domain-wise concentration of the relatively coarse fibres to sufficiently efficiently counteract macro-cracking. Whether or not this applies, what is most remarkable - and extremely valuable - is that it is possible to counteract the well-known mechanical weakness of rosin and similar materials with concentration of fibres which do not disturb the antifouling or (where applicable) the self-polishing properties of the paint.

Preferred fibres have an average length of 5-2000 µm and an average thickness of 1-50 µm with a ratio between the average length and the average thickness of at least 5, especially an average length of 10-500 µm and an average thickness of 1-25 µm with a ratio between the average length and the average thickness of at least 10, in particularly an average length of 40-300 µm and an average thickness of 2-10 µm with a ratio between the average length and the average thickness of at least 20. Also, fibres having an average length of 80-200 µm and an average thickness of 2-20 µm with a ratio between the average length and the average thickness of at least 10 may advantageously be used.

The concentration of the fibres is normally in the range of 0.1-30% by solids volume of the paint, such as 0.5-10% by solids volume of the paint. Especially relevant concentrations of fibres, of course depending upon the type and size of the fibres, may be 2-10%, such as 2-7%, or 3-10%, such as 3-8% by solids volume of the paint.

Preferred fibres according to the invention are those which, when incorporated in Model Paint A and tested in the Laboratory Cracking Test herein, results in a cracking ranking at least 1 ranking unit higher than the cracking ranking of the paint without the fibres, preferably 2 ranking units higher than the ranking of the paint without the fibres, especially 3 ranking units higher than the ranking of the paint without the fibres.

In the present context the term "binder system" is intended to mean the binder phase of a paint, consisting of one or several individual binder components.

Examples of such binder components are:
rosin and rosin equivalents;
linseed oil and derivatives thereof; castor oil and derivatives thereof; soy bean oil and derivatives thereof; saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether, of polyvinyl methyl ether, polyvinyl isobutyl ether, polyvinyl ethyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerized tall oil fatty acids; cyclized rubbers; epoxy esters; epoxy urethanes; polyurethanes; epoxy polymers; hydroxypolyether resins; polyamine resins; etc., as well as copolymers thereof.

The individual binder components may be self-polishing or non-soluble.

In the present context, the term "rosin" is intended to mean gum rosin; wood rosin of grades B, C, D, E, F, FF, G, H, I, J, K, L, M, N, W-G, W-W (as defined by the ASTM D509 standard); virgin rosin; hard rosin; yellow dip rosin; NF wood rosin; tall oil rosin; or colophony or colophonium; as well as any of the single constituents of natural rosins, e.g., abietic acid, abietinic acid, sylvic acid, dihydroabietic acid, tetrahydroabietic acid, dehydroabietic acid, neoabietic acid, pimaric acid, laevopimaric acid, isopimaric acid, sandaracopimaric acid, palustric acid, dextro-pimaric acid, isodextro-pimaric acid, dextropimarinal, isodextropimarinal, xanthoperol, tatarol, podocarpic acid, phyllocladen, sugiol, ferruginol, himokiol, manool, manoyloxide, ketomanoyloxide, cativinic acid, eperuanic acid and all other rosin components based on the diterpene skeleton of abietic acid; as well as any mixtures thereof.

In the present context the term "rosin equivalents" is intended to mean all types of rosin (as defined above) derivatized according to any of the following chemical reactions or processes: hydrogenation; maleinisation; polymerisation; esterification; metal salt formation/formation of metallic resinates; decarboxylation; dehydrogenation-hydrogenation/disproportionation; addition; oxidation; isomerisation; acylation; alkylation; amidation; arylation; Dies-Alder reactions; 1,3-dipolar addition; epoxidation; formylation; hydrocarboxylation; hydroboration; halogenation; hydration; hydroformylation; hydroxylation; hydrometallation; oxyamination; reduction; sulphonation; aminomethylation; dicarbalkoxylation; ozonolysis; as well as mixtures thereof. The term "rosin equivalents" also includes any reaction products formed by reaction between the rosin or rosin equivalent contained in the composition and any other of the components of a paint composition, e.g. copper resinate which is a reaction product of cuprous oxide and rosin.

In a preferred embodiment of the marine antifouling paint according to the invention the binder system is present in the paint in an amount of 15-80%, preferably 20-70%, such as 25-60%, in particular 35-60%, such as 40-60%.

In a further preferred embodiment of the marine antifouling paint according to the invention the binder system comprises rosin or a rosin equivalent, preferably the amount of rosin or a rosin equivalent is in the range of 15-80% by solids volume of the paint, more preferably 20-70%, such as 20-60%, by solids volume of the paint, in particular 25-60%, such as 25-50%, by solids volume of the paint.

In another preferred embodiment of the marine antifouling paint according to the invention the amount of rosin or rosin equivalent exceeds 30%, such as 40% or more, by solids volume of the binder system, in particular more than 50%, such as more than 60%, by solids volume of the binder system, or even higher such as more than 70% by solids volume of the binder system.

In a preferred embodiment of the marine antifouling paint according to the present invention the binder system is of a hydrophilic kind or is rendered hydrophilic by chemical or physical processes (e.g. hydrolysis and complexation) when incorporated in the paint composition or when contacted with the marine environment (e.g. hydrolysis, exchange of ions, or mechanical erosion). Either by inherency or by one or more of these processes the antifouling paint as a whole is rendered self-polishing.

In the present context the term "hydrophilic binder system" is intended to mean that the component in question is characterized by having a surface tension in the range of 30-80 mN/m such as 30-70 mN/m, preferably 40-80 mN/m, especially 50-80 mN/m, such as 60-80 mN/m.

In the present context the term "biologically active agent" is intended to mean any chemical compound or mixture of chemical compounds which has the capability of suppressing the settlement of marine organisms, to any substrate containing the biologically active agent. The suppression can be executed by any mechanism lethal to the organisms, by any mechanism resulting in deterrence and/or repellence of the organisms with or without causing mortality or by any mechanism inhibiting the settlement of the organisms with or without causing mortality.

Examples of biologically active agents are:
organometals such as trialkyltin salts such as hydroxytriphenylstannane, dibutylbis(1-oxododecyloxy)-stannane, fluorotriphenylstannane, chlorotriphenylstannane, tributylfluorostannane, and tributyltin maleate; hexabutyldistannoxane; trialkyltin copolymers such as tributyltin resinate, tributyltin acrylate copolymer, and tributyltin methacrylate copolymer; metallo-dithiocarbamates such as bis(dimethyldithiocarbamato)zinc, ethylene-bis(dithiocarbamato)zinc, ethylene-bis(dithiocarbamato)manganese, and complexes between these; bis(1-hydroxy-2(1H)-pyridinethionato-O,S)-(T-4) copper; copper acrylate; bis(1-hydroxy-2(1H)-pyridinethionato-O,S)-(T-4) zinc; phenyl(bispyridyl)-bismuth dichloride; tributyltinoxide; tributyltinfluoride; triphenyltinfluoride;
metal biocides such as copper, copper metal alloys such as copper-nickel alloys; metal oxides such as cuprous oxide and cupric oxide; metal salts such as cuprous thiocyanate, barium metaborate, and copper sulphide;
heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-lH-pyrrole-2,5-dione, 2,3,5,6-tetrachloro-4-(methylsulphonyl)-pyridine, 2-methylthio-4-tert-butylamino-6-cyclopropylamine-s-triazin, and quinoline derivatives;
heterocyclic sulphur compounds such as 2-(4-thiazolyl)benzimidazole, 4,5-dichloro-2-octyl-3(2H)-isothiazolone, 4,5-dichloro-2-octyl-3(2H)-isothiazoline, 1,2-benzisothiazolin-3-one, and 2-(thiocyanatomethylthio)-benzothiazole;
urea derivatives such as N-(1,3-bis(hydroxymethyl)-2,5-dioxo-4-imidazolidinyl)-N,N'-bis(hydroxymethyl)urea, and 3-(3,4-dichlorophenyl)-1,1-dimethyl urea;
amides or imides of carboxylic acids; sulphonic acids and of sulphenic acids such as 1,1-dichloro-N-((dimethylamino)sulphonyl)-1-fluoro-N-(4-methylphenyl)-methanesulphenamide, 2,2-dibromo-3-nitrilo-propionamide, N-(dichlorofluoromethylthio)-phthalimide, N,N-dimethyl-N'-phenyl-N'-(dichlorofluoromethylthio)-sulphamide, and N-methylol formamide;
salts or esters of carboxylic acids such as 2-((3-iodo-2-propynyl)oxy)-ethanol phenylcarbamate and N,N-didecyl-N-methyl-poly(oxyethyl)ammonium propionate;
amines such as dehydroabiethylamines and cocodimethylamine;
substituted methane such as di(2-hydroxy-ethoxy)methane, 5,5'-dichloro-2,2'-dihydroxydiphenylmethane, and methylene-bisthiocyanate;
substituted benzene such as 2,4,5,6-tetrachloro-1,3-benzenedicarbonitrile, 1,1-dichloro-N-((dimethylamino)sulphonyl)-1-fluoro-N-phenylmethanesulphenamide, and 1-((diiodomethyl)sulphonyl)-4-methyl-benzene;
tetraalkyl phosphonium halogenides such as tri-n-butyltetradecyl phosphonium chloride;
guanidine derivatives such as n-dodecylguanidine hydrochloride;
disulphides such as bis-(dimethylthiocarbamoyl)-disulphide, tetramethylthiuram disulphide;
and mixtures thereof.

In the antifouling paint composition, the total amount of the biologically active agent(s) may be in the range of 2-50%, such as 3-50%, by solids volume of the paint, preferably 5-50%, such as 5-40%, by solids volume of the paint. Depending upon the type and specific activity of the biologically active agent, the total amount of the biologically active agent may, e.g., be 5-15% or 10-25% by solids volume of the paint.

A preferred embodiment of the marine antifouling paint according to the present invention is a paint characterized in, that the binder system has a polishing rate of at least 1 µm, such as at least 2 µm, per 10,000 Nautical miles, preferably at least 3 µm, such as at least 5 µm, per 10,000 Nautical miles, especially at least 10 µm, such as at least 15 µm, per 10,000 Nautical miles, such as at least 30 µm per 10,000 Nautical miles, when incorporated in a model paint:
50%, by solids volume, of the binder system
10%, by solids volume, of tricresyl phosphate
26%, by solids volume, of zinc oxide
10%, by solids volume, of cuprous oxide
4%, by solids volume, of thixotropic bentonite
and tested in the Polishing Rate Test herein.

Another preferred embodiment of the marine antifouling paint according to the present invention is a self-polishing paint where the polishing rate is retained to an extent of at least 10%, such as at least 20%, compared to the same paint without the fibres, when tested in the Polishing Rate Test herein. In most of the practical embodiments of the invention the polishing rate is retained to an even larger extent, e.g. 50%, such as 70%. In especially interesting embodiment, e.g. when water-soluble fibres are used, the polishing rate may be substantially the same (within the inaccuracy of the method) compared to the same paint without the fibres.

A typical marine antifouling paint composition according to the invention comprises a binder system, at least one biologically active agent, and fibres. Furthermore, the antifouling paint may comprise one or more components selected among pigments, fillers, dyes, solvents, and additives.

Examples of pigments are grades of titanium dioxide, red iron oxide, zinc oxide, carbon black, graphite, yellow iron oxide, red molybdate, yellow molybdate, zinc sulphide, antimony oxide, sodium aluminium sulphosilicates, quinacridones, phthalocyanine blue, phthalocyanine green, black iron oxide, graphite, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow. Such materials are characterized in that they render the final paint coating non-transparent and non-translucent. The pigments may further be selected from pigment-like ingredients such as fillers. Examples of fillers are calcium carbonate, dolomite, talc, mica, barium sulphate, kaolin, silica, perlite, magnesium oxide, calcite and quartz flour, etc. These materials are characterized in that they do not render the paint non-translucent and therefore do not contribute significantly to hide any material below the coating of the paint composition of the invention.

In a preferred embodiment of the present invention, the paint composition has a total pigment content (pigment and pigment-like ingredients) in the range of 10-60%, preferably 15-50%, in particular 25-50% such as 20-40%, of the solids volume of the paint composition.

Examples of dyes are 1,4-bis(butylamino)anthraquinone and other anthraquinone derivatives; toluidine dyes etc.

Examples of solvents in which the components of the antifouling paint are dissolved, dispersed or emulsified are water; alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether and butyl diglycol; esters such as methoxypropyl acetate, n-butyl acetate and 2-ethoxyethyl acetate; chlorinated hydrocarbons such as methylene chloride, tetrachloroethane and trichloroethylene; and mixtures thereof.

Examples of additives are:
plasticizers such as chlorinated paraffin; low molecular weight polybutene; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulphonamides such as N-ethyl-p-toluensulphonamide, alkyl-p-toluene sulphonamide; adipates such as bis(2-ethylhexyl)adipate), diisobutyl adipate and dioctyladipate; phosphoric acid triethyl ester; poly(vinyl ethyl ether); polymerised acrylate; butyl stearate; sorbitan trioleate; epoxidised soybean oil; polymerised acrylate plasticizers; polyvinyl methyl ether; and polyvinyl ethyl butyl ether;
surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulphate; alkylphenol ethoxylates; and soya lecithin;
defoaming agents such as silicone oils;
catalysts such as polymerization catalysts and initiators, e.g. azobisisobutyronitrile, ammonium persulphate, dilauryl peroxide, di-t-butyl peroxide, cumene hydroperoxide, p-toluenesulphonic acid; dryers, e.g. metal octoates and metal naphthenates; and activators, e.g. salicylic acid and benzyl alcohol;
stabilizers such as stabilizers against light and heat, e.g. 2-hydroxy-4-methoxybenzophenone, 2-(5-chloro-(2H)-benzotriazol-2-yl)-4-methyl-6-(tert-butyl)phenol, 2,4-ditert-butyl-6-(5-chlorobenzotriazol-2-yl)phenol;
stabilizers against moisture such as molecular sieves or water scavengers;
stabilizers against oxidation such as butylated hydroxyanisole; butylated hydroxytoluene; propylgallate; tocopherols; L-ascorbyl palmitate; carotenes; vitamin A;
polymerization inhibitors, e.g. para-benzoquinone, hydroquinone and methyl-hydroquinone;
inhibitors against corrosion such as aminocarboxylates, calcium silicophosphate, ammonium benzoate, barium/calcium/zinc/magnesium salts of alkylnaphthalene sulphonic acids, zinc phosphate; zinc metaborate;
coalescing agents such as glycols; and
thickeners and anti-settling agents such as colloidal silica, hydrated aluminium silicate (bentonite), aluminiumtristearate, aluminiummonostearate, ricinus oil, xanthan gum, salicylic acid, chrysotile, pyrogenic silica, hydrogenated castor oil, and organo-modified clays.

A preferred embodiment of the marine antifouling paint according to the invention is a paint, which additionally comprises one or more pigment(s) and one or more solvent(s).

The antifouling paint composition may be prepared by any suitable technique that is commonly used within the field of paint production. Thus, the various components may be mixed together using a high speed disperser, a ball mill, a pearl mill, a three-roll mill etc.

The antifouling paint composition according to the invention may be applied to the marine structure to be protected by means of any of the usual techniques used within the paint field such as by means of a brush, a roller, a pad, by dipping, by spraying etc. The exact technique chosen depends upon the object to be protected and also upon the particular composition (such as its viscosity etc.) and upon the particular situation. Preferred applications techniques are spraying and by means of a brush or a roller.

The antifouling paint composition according to the invention may be applied to the marine structure to be protected in one or several successive layers, typically 1 to 5 layers, preferably 1 to 3 layers. The total dry film thickness (DFT) of the coating applied per layer will typically be 10 to 300 µm, preferably 20 to 250 µm, such as 40 to 200 µm. Thus, the thickness of the coating will typically be 10 to 900 µm, preferably 20 to 750 µm, in particular 40 to 600 µm, such as 80 to 400µm.

The marine structure to which the paint composition according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a paint composition of the invention to a marine structure, the marine structure may first be coated with a primer-system which may comprise several layers and may be any of the conventional primer systems used in connection with application of antifouling paints to marine structures. Thus, the primer system may include a first layer of a tar or bitumen composition followed by a layer of an adhesion-promoting primer. In a preferred embodiment, the primer-system is a composition having a polishing rate of less than 1 µm per 10,000 Nautical miles.

A further preferred embodiment of the marine antifouling paint according to the present invention is a paint which when tested in the Steel Panel Elongation Test herein is capable of being elongated 5 mm, preferably 6 mm, in particular 7 mm, such as 8 mm, without showing any tendency to neither microcracking nor macrocracking.

A further preferred embodiment of the marine antifouling paint according to the present invention is a paint, which after exposure to weathering for 1 month, as described in the Atmospheric Cracking Test herein, has a macrocracking density rating of at least 1 rating unit higher, preferably at least 2 rating units higher, especially at least 3 rating units higher, in particular 4 rating units higher, compared to the paint without the fibres.

A further preferred embodiment of the marine antifouling paint according to the present invention is a paint, which after exposure to weathering for 3 months, as described in the Atmospheric Cracking Test herein, has a macrocracking density rating of at least 1 rating unit higher, preferably at least 2 rating units higher, especially at least 3 rating units higher, in particular 4 rating units higher, compared to the paint without the fibres.

A further preferred embodiment of the marine antifouling paint according to the present invention is a paint, which after exposure to weathering for 6 months, as described in the Atmospheric Cracking Test herein, has a macrocracking density rating of at least 1 rating unit higher, preferably at least 2 rating units higher, especially at least 3 rating units higher, in particular 4 rating units higher, compared to the paint without the fibres.

A further preferred embodiment of the marine antifouling paint according to the invention is a paint, showing no failure when tested in the Mandrel Test herein using a mandrel having a diameter of at least 16 mm, preferably at least 12 mm, such as 10 mm, in particular 8 mm, such as 6 mm.

A still further preferred embodiment of the marine antifouling paint according to the invention is a paint, showing no failure when tested in the Direct Impact Test herein using the standard weight dropped from a height of at least 50 cm, preferably at least 60 cm, such as at least 70 cm or even at least 90 cm.

A further aspect of the present invention concerns a marine antifouling paint composition comprising:
1) a binder system containing 15-80%, such as 20-70%, especially 20-60%, such as 25-60%, in particular 25-50%, by solids volume of the paint, of rosin or rosin equivalent(s);
2) fibres; and
3) optionally one or more biologically active agent(s),
where the terms "binder system", "solids volume", "rosin", "rosin equivalents", "biologically active agent", and "fibres" are intended to have the meaning as defined above. Preferred fibres are those as described above with respect to composition, dimensions, etc.

Yet another aspect of the present invention concerns a marine antifouling paint composition comprising:
1) a binder system containing more than 30%, such as more than 40%, preferably more than 50%, such as more than 60%, of rosin or rosin equivalent(s) based on the solids volume of the binder system;
2) fibres; and
3) optionally one or more biologically active agent(s),
where the terms "binder system", "solids volume", "rosin", "rosin equivalents", "biologically active agent", and "fibres" are intended to have the meaning as defined above. Preferred fibres are those as described above with respect to composition, dimensions, etc.

Yet a further aspect of the present invention concerns a marine antifouling paint composition comprising:
1) a binder system constituting 15-80%, preferably 20-70%, such as 25-60%, in particular 35-60%, such as 40-60% by solids volume of the paint composition;
2) fibres constituting 0.1-30%, such as 0.5-10% by solids volume of the paint composition;
3) one or more biologically active agent(s) constituting 2-50%, such as 3-50%, by solids volume of the paint composition, preferably 5-50%, such as 5-20% by solids volume of the paint composition; and
4) one or more pigment(s) constituting 10-60%, preferably 15-50%, in particular 25-50%, such as 20-40%, of the solids volume of the paint composition.
where the terms "binder system", "solids volume", "rosin", "rosin equivalents", "biologically active agent", "pigment", and "fibres" are intended to have the meaning as defined above. Preferred fibres are those as described above with respect to composition, dimensions, etc.

### TEST METHODS

### Laboratory Cracking Test

The test paint was applied onto a steel panel (10 x 15 cm²) by means of a hand applicator (doctor blade type) in a dry film thickness (DFT) of approximately 200 +/- 30 µm. The panel was dried for two days in the oven at 60°C.

The anti-cracking performance was evaluated on a scale from 0 to 10:
- 0: 10-100% of the area of the steel panel shows macrocracking.
- 1: Macrocracking is observed on an area-percentage lower than 10, and/or microcracking is observed on 50-100% of the area of the panel.
- 2: Microcracking is observed on less than 50% of the area of the panel.
- 3-4: Neither macro- nor microcracking is observed, but the paint film is very brittle when cut with a sharp knife.
- 5-6: No cracking is observed. The dry paint film shows some cohesive properties when cut with a sharp knife.
- 7-8: No cracking is observed. The dry paint film shows acceptable cohesive properties when cut with a sharp knife. The cutting of the sample of the film of 1 x 1 cm² can be performed without cracking or breaking of the sample.
- 9-10: No cracking is observed. The dry paint film shows good cohesive properties when cut with a sharp knife. A free-cut film of 1 x 1 cm² shows some flexibility and toughness.
Macrocracking corresponds to cracking mesh size type medium and large described in TNO circular 92.
Microcracking corresponds to cracking mesh size type small and micro described in TNO circular 92.

### Atmospheric Cracking Test

An acrylic test panel (15 x 20 cm²) was coated with 80 µm (DFT) of a commercial vinyl primer (Hempanyl Tar 16280 ex Hempel's Marine Paints A/S) applied by air spraying. After minimum 24 hours drying in the laboratory at room temperature the test paint was applied by means of a hand applicator (doctor blade type) in a DFT of approximately 200 +/- 30 µm. The panel was dried for 48 hours in the laboratory at room temperature before exposure to natural weathering.

The test panel was mounted in an outdoor rack at a test site in Polinya (Northeastern Spain, 2°E, 41.3°N). The rack was oriented to the south forming an angle of 45° with the ground.

The performance was evaluated at intervals of 2-4 weeks. At each inspection, the panel was rated for macrocracking density on a scale from 0 to 5:
0 = 50-100 area % coverage by cracking
1 = 26-49 area % coverage by cracking
2 = 6-25 area % coverage by cracking
3 = 3-5 area % coverage by cracking
4 = 0-2 area % coverage by cracking
5 = No cracking

The higher the rating, the better mechanical properties.

### Steel Panel Elongation Test

A steel panel (15 x 3 x 0.1 cm³) was coated with 125 µm (DFT) of a commercial coal tar epoxy primer (Hempadur Tar Epoxy 15130 ex Hempel's Marine Paints A/S) applied by air spraying. After 12-36 hours drying in the laboratory at room temperature a second coat was applied in 80 µm DFT of a commercial vinyl primer (Hempanyl Tar 16280 ex Hempel's Marine Paints A/S) applied by air spraying. After minimum 24 hours drying in the laboratory at room temperature the test paint was applied by air spraying in two coats in a DFT of approximately 100 µm per coat (total model paint DFT: 200 µm). Recoating interval between two coats of the test paint: 24 hours. The panel was dried for 1 month in the laboratory at room temperature before testing.

The test panel was tested in an Instron equipment (Instron 4507), by triplicate, in the following way. The steel panel was clamped in sample holders. One sample holder had a fixed position and the other was moved away at a constant speed of 5 mm per min. The full paint system and the steel panel were elongated until the paint film broke (cracked), and the elongation was measured. The higher elongation, the better mechanical properties.

### Free Film Elongation Test

The test paint was applied onto paraffin paper by means of a hand applicator (doctor blade type) in a DFT of approximately 200 +/- 30 µm. The paint and the paraffin paper were dried for two days in an oven at 60°C.

Samples of free film (2 x 9 cm²) were cut and detached from the paraffin paper by using a sharp knife. Tests samples were tested in an Adamel Lhomargy equipment, (Adamel Lhomargy DY34), by triplicate, in the following way. Paint samples were clamped in sample holders. One sample holder had a fixed position and the other was moved away at a constant speed of 5 mm per min. The paint sample was elongated until the stress (force/area) which is needed to elongate (strain) the sample reached a constant value (yield strength), and the value was recorded. The higher the stress value the better toughness.

If the test paint samples cracked when they were removed from the paraffin paper or when they were clamped to the sample holders, *i.e.,* before the samples were subjected to any controlled strain by the apparatus, they were given a stress value of 0 MPa.

By definition, test paints having a stress value of 0 MPa were considered as being "mechanically weak".

### Polishing Rate Test

An acrylic test panel (13.5 x 7 cm²) with a curvature corresponding to that of a cylindrical drum with a diameter of 1 m was first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint was applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) were applied along each longitudinal edge by dipping. As a result of this, the central part with a width of 5 cm remained uncovered by the non-erodible coating. The panel was dried for at least 1 week in the laboratory at room temperature before testing.

The test panel was fixed onto the convex surface of a cylindrical drum of 1 m in diameter and was rotated in sea water with a salinity in the range of 37-38 parts per thousand at an average temperature of 26°C at a test site in the harbour of Villanova y La Geltrú in Northeastern Spain which is situated at longitude 41.2°N (see also Morale, E. & Arias, E., Rev. Iber. Corros. y Prot., vol XIX(2), 1988, pp. 91-96). The rotor was rotated at a peripheral speed of 15 knots for a relative distance of 33,100 Nautical miles.

Every 3-5 weeks paint chips (1.0 x 0.5 cm²) were collected from the test panel in such a way that their surface comprised both a part coated with the experimental coating only as well as a part coated with both experimental coating and the non-erodible coating. The chips were embedded in paraffin wax and cut with a microtome. Cross sections of the experimental coating were examined under a microscope. Compared to the part coated with the non-erodible coating, the experimental coating showed a decrease of DFT of the outer layer (polishing rate).

### Mechanical properties test - Mandrel Test

Steel panels (15 x 10 x 0.5 cm) were coated with 40 µm (DFT) of a commercial epoxy vinyl primer (Hempadur 47190, from Hempel's Marine Paints A/S) applied by air spraying. After 12-36 hours drying in the laboratory at room temperature the experimental model paints were applied by air spraying in one coat, in a DFT of approximately 100 µm. The panels were dried for 1 day in the laboratory at room temperature plus one day in the oven at 60°C before testing.

Test panels were tested using a cylindrical mandrel according to ASTM Designation D522 using cylindrical mandrels. Steel panels were bent using mandrels of different diameters and inspected for cracking. By gradually decreasing the mandrel diameter the point of which failure occurs was determined. The smaller diameter the better mechanical properties. Mandrels of the following diameters were used (32, 25, 20, 19, 16, 13, 12, 10, 8, 6, 5, 4, and 3 mm) .

### Mechanical properties test. Direct Impact Test

Steel panels (15 x 10 x 0.8 cm) were coated with 40 µm (DFT) of a commercial epoxy vinyl primer (Hempadur 47190, from Hempel's Marine Paints A/S) applied by air spraying. After 12-36 hours drying in the laboratory at room temperature the experimental model paints were applied by air spraying in one coat, in a DFT of approximately 100 µm. The panels were dried for 1 day in the laboratory at room temperature plus one day in the oven at 60°C before testing.

Test panels were tested for direct impact strength according to ASTM Designation D 2794. The standard weight (100 g; indentor diameter 20 mm) was dropped from a height so as to strike an indentor that deforms the coating and the substrate. By gradually increasing the height from which the weight was dropped, the point of which failure occurs was determined. The higher distance the better mechanical properties. Initial height 10 cm. Height was increased 10 cm each time until a visual failure was observed.

Table 1 gives an overview of the different fibre types tested in Example 1-7.

**TABLE 1**

| Fibre sample | Fibre type | Average fibre length (µm) | Average fibre thickness (µm) |
|---|---|---|---|
| 1 | Synthetic mineral fibre | 140 | 4 |
| 2 | | | |
| 3 | | | |
| 4 | | 160 | |
| 5 | Synthetic mineral fibre | 160 | 4 |
| 6 | | 200 | |
| 7 | | 300 | |
| 8 | Volcanic rock fibre fibre | 125 | 5 |
| 9 | | 650 | |
| 10 | Polyamide | 500 | 15-30 |
| 11 | | | |
| 12 | | | 15-35 |
| 13 | Polyacrylonitrile | 500 | - |
| 14 | Polyester/polyamide | 500 | 10-20 |
| 15 | Polypropylene | 500 | 21 |
| 16 | Cotton | 400 | 3-12/10-40 |
| 17 | Paper cellulose | 400 | 20-100 |
| 18 | Polyacrylonitrile pre-oxidized | 500 | 10-12 |
| 19 | Jute | 500 | 30-500 |
| 20 | E-glass | 230 | 9-14 |
| 21 | | 150 | |
| 22 | | 400 | |
| 23 | | 250 | |
| 24 | | 150 | |
| 25 | Mineral glass | 500 | 4.4 |
| 26 | Rockwool | 500 | 5 |
| 27 | Ceramic | 500 | 2.8 |
| 28 | Polyethylene | 200 | - |
| 29 | | 400 | - |
| 30 | Polyethylene + silica | 400 | - |
| 31 | | 100 | - |
| 32 | Cellulose | 30 | 18 |
| 33 | | 60 | 20 |
| 34 | Cellulose | 120 | 20 |
| 35 | | 700 | |
| 36 | Cellulose | 200 | 20 |
| 37 | Conifer | 70-150 | - |
| 38 | | 150-250 | - |
| 39 | Cellulose | 65%<90µm | - |
| 40 | | 80%<90µm | - |
| 41 | | 95%<90µm | - |
| 42 | | 65%<32µm | - |
| 43 | | - | - |
| 44 | Silicone | 1-15 | - |
| 45 | | 1-10 | - |
| 46 | Acrylonitrile | - | - |
| 47 | Wollastonite | - | - |
| 48 | | - | - |
| 49 | | 3 | - |
| 50 | Rubber | 60 | - |
| 51 | Potassium Aluminium Silicate | 7.0 | - |
| 52 | Calcined bauxite | 8.3 | - |
| 53 | C-glass | - | - |
| 54 | | - | - |
| 55 | | 820 | 5 |
| 56 | | 250 | |
| 57 | | 175 | |
| 58 | | 100 | |
| 59 | | 175 | |
| 60 | | | |
| 61 | Aramide | 800 | 12 |
| 62 | | 1200 | |

The fibre sample figures in Table 1 correspond to the following product types:
1. Inorphil 061-10 ex Laxå Bruk AB (Sweden)
2. Inorphil 161-10 ex Laxå Bruk AB (Sweden)
3. Inorphil 361-10 ex Laxå Bruk AB (Sweden)
4. Inorphil 061-20 ex Laxå Bruk AB (Sweden)
5. Inorphil 461-20 ex Laxå Bruk AB (Sweden)
6. Inorphil 061-30 ex Laxå Bruk AB (Sweden)
7. Inorphil 061-60 ex Laxå Bruk AB (Sweden)
8. RF 5104 ex Lapinus Fibres BV (The Netherlands)
9. RF 5118 ex Lapinus Fibres BV (The Netherlands)
10. F PA 222/040 ex Schwarzwälder Textil-Werke (Germany)
11. F PA 240/040 ex Schwarzwälder Textil-Werke (Germany)
12. F PA 230/040 ex Schwarzwälder Textil-Werke (Germany)
13. F PAC 238/040 ex Schwarzwälder Textil-Werke (Germany)
14. F PES 231/040 ex Schwarzwälder Textil-Werke (Germany)
15. F PP 261/040 ex Schwarzwälder Textil-Werke (Germany)
16. FB 1/035 ex Schwarzwälder Textil-Werke (Germany)
17. FZ 320/040 ex Schwarzwälder Textil-Werke (Germany)
18. F PAC O 245/040 ex Schwarzwälder Textil-Werke (Germany)
19. F 501/050 ex Schwarzwälder Textil-Werke (Germany)
20. FG 400/060 ex Schwarzwälder Textil-Werke (Germany)
21. FG 400/030 ex Schwarzwälder Textil-Werke (Germany)
22. FG 400/300 ex Schwarzwälder Textil-Werke (Germany)
23. FG 400/100 ex Schwarzwälder Textil-Werke (Germany)
24. FG 440/040 ex Schwarzwälder Textil-Werke (Germany)
25. F 550/1 S ex Schwarzwälder Textil-Werke (Germany)
26. F 554/1 SR ex Schwarzwälder Textil-Werke (Germany)
27. F 580/1 S ex Schwarzwälder Textil-Werke (Germany)
28. Hostapulp ex Schwarzwälder Textil-Werke (Germany)
29. Sylothix 51 ex Grace AB (Germany)
30. Sylothix 52 ex Grace AB (Germany)
31. Sylothix 53 ex Grace AB (Germany)
32. Arbocel BE 600-30 ex J. Rettenmaier & Söhne GmbH + Co. (Germany)
33. Arbocel BE 600 ex J. Rettenmaier & Söhne GmbH + Co. (Germany)
34. Arbocel BE 00 ex J. Rettenmaier & Söhne GmbH + Co. (Germany)
35. Arbocel BC 1000 ex J. Rettenmaier & Söhne GmbH + Co. (Germany)
36. Arbocel BWW-40 ex J. Rettenmaier & Söhne GmbH + Co. (Germany)
37. Lignocel C 120 ex J. Rettenmaier & Söhne GmbH + Co. (Germany)
38. Lignocel C 250 A ex J. Rettenmaier & Söhne GmbH + Co. (Germany)
39. Technocel 300 ex C. F. F. Cellulose-Füllstoff-Fabrik (Germany)
40. Technocel 200 ex C. F. F. Cellulose-Füllstoff-Fabrik (Germany)
41. Technocel 150 DU ex C. F. F. Cellulose-Füllstoff-Fabrik (Germany)
42. Technocel 90 DU ex C. F. F. Cellulose-Füllstoff-Fabrik (Germany)
43. Technocel 400 C ex C. F. F. Cellulose-Füllstoff-Fabrik (Germany)
44. DC 22 ex Dow Corning Chemical Co. (U.S.A)
45. DC 23 ex Dow Corning Chemical Co. (U.S.A)
46. Ricen PC ex Montefibre (Italy)
47. Vansil G ex Vanderbilt (U.S.A)
48. Nyad G ex Nyco Minerals (U.S.A)
49. Wollastocoat AS & ES ex Nyco Minerals (U.S.A)
50. M 40 ex Mesalles (Spain)
51. Lanco Mikal 00180 ex Langer (Germany)
52. Portalum A-25 ex Poorter (The Netherlands)
53. Tixal 102 ex Tixal (Germany)
54. Tixal 202 ex Tixal (Germany)
55. RCF-600 ex Sumitomo (Japan)
56. RCF-160 ex Sumitomo (Japan)
57. RCF-140 ex Sumitomo (Japan)
58. RCF-015 ex Sumitomo (Japan)
59. RCF-140G ex Sumitomo (Japan)
60. RCF-140N ex Sumitomo (Japan)
61. Kevlar Txp (6F542) ex Du Pont (Switzerland)
62. Kevlar Txp (6F539) ex Du Pont (Switzerland)

The invention is illustrated by the following non-limiting Examples. In Examples 1-4 the impact of fibres on the cracking tendency of model paints is tested, in Example 5 the polishing rate of model paints with and without fibres is tested, and in Example 6 and 7 the mechanical strength of model paints is tested.

### EXAMPLE 1

Rosin is a very brittle material. Paints formulated with rosin as the main or sole binder component show a very pronounced tendency to crack. A number of fibres were tested in the Laboratory Cracking Test for their effect on preventing cracking and improving film integrity in a rosin based model paint.

Model paints A with the following compositions were prepared:
60 parts by volume of natural gum rosin
10 parts by volume of cuprous oxide with an average particle size of 2-4 µm
26 parts by volume of zinc oxide with an average particle size of approximately 0.2 µm
4 parts by volume of thixotropic bentonite (Bentone 38 ex NL Chemicals)
   optionally 4 parts by volume of fibres (see Table 1) 20-30% by weight of total wet paint of xylene

Generally, the model paints were prepared as follows:

200 ml of the thoroughly mixed coating composition was introduced into a tight metallic container of 0.5 1 capacity together with 100 ml (bulk volume) of glass beads with a diameter of 2-3 mm. The container was then shaken for 45 min. on a mechanical shaker. The coating composition was separated from the glass beads by filtration.

In each test series a reference paint, without any content of fibres, was included. In Table 2 the results of the tests are shown.

**TABLE 2**

| Fibre sample | Mechanical properties evaluation |
|---|---|
| 1 | 8 |
| 4 | 9 |
| 5 | 9 |
| 6 | 9 |
| 7 | 9 |
| 8 | 8 |
| 9 | 8 |
| 10 | 7 |
| 11 | 8 |
| 12 | 8 |
| 13 | 8 |
| 14 | 8 |
| 15 | 8 |
| 16 | 8 - |
| 17 | 7 |
| 18 | 8 |
| 19 | 5 |
| 20 | 5 |
| 21 | 0 |
| 22 | 1 |
| 23 | 5 |
| 24 | 5 |
| 25 | 8 |
| 26 | 6 |
| 27 | 6 |
| 28 | 1 |
| 29 | 8 |
| 30 | 7 |
| 31 | 3 |
| 32 | 3 |
| 33 | 5 |
| 34 | 5 |
| 35 | 3 |
| 36 | 3 |
| 37 | 7 |
| 38 | 5 |
| 39 | 8 |
| 40 | 8 |
| 41 | 7 |
| 42 | 5 |
| 43 | 2 |
| 44 | 3 |
| 45 | 1 |
| 46 | 9 |
| 47 | 0 |
| 48 | 6 |
| 49 | 0 |
| 50 | 1 |
| 51 | 0 |
| 52 | 0 |
| 53 | 3 |
| 54 | 3 |
| 55 | 7 |
| 56 | 6 |
| 57 | 6 |
| 58 | 0 |
| 59 | 6 |
| 60 | 6 |
| 61 | 4 |
| 62 | 3 |
| Reference | 0 |

### EXAMPLE 2

In addition to its poor mechanical properties rosin has a high tendency to oxidize, especially when exposed to natural weathering. Thus, paints formulated with rosin as main or sole binder component show a very pronounced tendency to crack under natural weathering. The oxidation process leads to a volume increase of the paint film, which then will be mechanically weakened and eventually crack.

A number of fibres were tested in the Atmospheric Cracking Test for their effect on preventing cracking and improving film integrity in a rosin based model paint exposed to natural weathering.

Model Paints A were prepared as described in Example 1 (specification of the used fibre sample see Table 3).

In Table 3, the results of the tests are shown after three months of atmospheric exposure.

**TABLE 3**

| Fibre sample | Mechanical properties evaluation (0-5) |
|---|---|
| | Macrocracking |
| 4 | 5 |
| 20 | 5 |
| 21 | 5 |
| 22 | 5 |
| 35 | 5 |
| 36 | 5 |
| Reference | 0 |

### EXAMPLE 3

Paints formulated with rosin as main or sole binder component show a very pronounced tendency to crack. A number of fibres were tested in the Steel Panel Elongation Test for their effect on preventing cracking and improving film integrity in rosin containing model paints exposed to a stress/strain test.

Model paints with the following compositions were prepared:
Model paints B
   10 parts by volume of a vinyl resin (Laroflex MP25 ex BASF)
   10 parts by volume of tricresyl phosphate
   40 parts by volume of natural gum rosin
   10 parts by volume of cuprous oxide with an average particle size of 2-4 µm.
   26 parts by volume of zinc oxide with an average particle size of approximately 0.2 µm
   4 parts by volume of thixotropic bentonite (Bentone 38 ex NL Chemicals)
      optionally 4 parts by volume of fibres (see Table 4) 20-30% by weight of total wet paint of xylene
Model paints C
   10 parts by volume of a polyamide resin (Eurelon 940 ex Witco)
   10 parts by volume of tricresyl phosphate
   40 parts by volume of natural gum rosin
   10 parts by volume of cuprous oxide with an average particle size of 2-4 µm
   26 parts by volume of zinc oxide with an average particle size of approximately 0.2 µm
   4 parts by volume of thixotropic bentonite (Bentone 38 ex NL Chemicals)
      optionally 4 parts by volume fibres (see Table 4)
   20-30% by weight of total wet paint of xylene
Model paint B1
   40 parts by volume of natural gum rosin
   10 parts by volume of Laroflex MP25
   10 parts by volume of tricresyl phosphate
   31 parts by volume of cuprous oxide with an average particle size of 2-4 µm
   5 parts by volume of titanium dioxide
   4 parts by volume of thixotropic bentonite (Bentone 38 ex NL Chemicals)
      optionally 5 parts by volume of fibres (see Table 4)
   20-30% by weight of total wet paint of xylene

The model paints were prepared as described in Example 1.

In Table 4, the results of the tests are shown.

**TABLE 4**

| Model paint | Fibre sample | Fibre amount %-solids volume | Minimum elongation for cracking (mm) |
|---|---|---|---|
| A | - | 0 | 3.2 |
| A | 4 | 4 | 6.1 |
| B | - | 0 | 2.8 |
| B | 4 | 4 | 5.7 |
| B1 | - | 0 | 3.6 |
| B1 | 4 | 5 | 6.6 |
| B1 | 21 | 5 | 4.6 |
| B1 | 28 | 5 | 5.0 |
| B1 | 30 | 5 | 9.3 |
| B1 | 44 | 5 | 6.0 |
| B1 | 48 | 5 | 4.5 |
| B1 | 51 | 5 | 3.7 |
| B1 | 57 | 5 | 6.0 |

### EXAMPLE 4

Paints formulated with rosin as main or sole binder component have, besides very pronounced tendencies to crack, very low cohesive properties. A selected fibre sample was tested in the Free Film Elongation Test for its effect on improving cohesive properties (toughness) in a rosin containing model paint exposed to a stress/strain test.

Model paints D with the following compositions were prepared:
10 parts by volume of a vinyl resin (Laroflex MP25 ex BASF)
10 parts by volume of polyvinylmethylether
40 parts by volume of natural gum rosin
10 parts by volume of cuprous oxide with an average particle size of 2-4 µm
26 parts by volume of zinc oxide with an average particle size of approximately 0.2 µm
4 parts by volume of thixotropic bentonite (Bentone 38 ex NL Chemicals)
   optionally 4 parts by volume of fibres (see Table 5) 20-30% by weight of total wet paint of xylene

The paints were prepared as described in Example 1.

In Table 5, the results of the test are shown.

**TABLE 5**

| Model paint | Fibre sample | Fibre amount % - solids volume | Stress (MPa) |
|---|---|---|---|
| D | - | 0 | 0 |
| D | 4 | 5 | 8.2 |
| D | 21 | 5 | 1.8 |
| D | 28 | 5 | 0 |
| D | 30 | 5 | 0 |
| D | 44 | 5 | 0 |
| D | 48 | 5 | 1.8 |
| D | 51 | 5 | 0 |
| D | 57 | 5 | 0 |

Higher figures were obtained when the stress was applied in the direction where the majority of the fibres were oriented.

### EXAMPLE 5

Paint formulated with mixtures of rosin and other film forming binder components (with or without additional plasticizers) show acceptable mechanical properties but low polishing rate. A number of model paints were tested in the dynamic rotor test in order to determine if the incorporation of fibres had any effect on the polishing rate.

Model paints with the following compositions were prepared:
Model paints E
   4 parts by volume of a vinyl resin (Laroflex MP25 ex BASF)
   35 parts by volume of natural gum rosin
   8 parts by volume of tricresyl phosphate
   38 parts by volume of cuprous oxide with an average particle size of 2-4 µm
   5 parts by volume of titanium dioxide
   4 parts by volume of thixotropic bentonite (Bentone 38 ex NL Chemicals)
      optionally 6 parts by volume of fibres (see Table 6) 20-30% by weight of total wet paint of xylene
Model paints F
   10 parts by volume of a vinyl resin (Laroflex MP25 ex BASF)
   32 parts by volume of natural gum rosin
   8 parts by volume of tricresyl phosphate
   35 parts by volume of cuprous oxide with an average particle size of 2-4 µm
   5 parts by volume of titanium dioxide
   4 parts by volume of thixotropic bentonite (Bentone 38 ex NL Chemicals)
      optionally 6 parts by volume of fibres (see Table 6) 20-30% by weight of total wet paint of xylene
Model paint G
   44 parts by volume of natural gum rosin
   16 parts by volume of tricresyl phosphate
   31 parts by volume of cuprous oxide with an average particle size of 2-4 µm
   5 parts by volume of titanium dioxide
   4 parts by volume of thixotropic bentonite (Bentone 38 ex NL Chemicals)
      optionally 5 parts by volume of fibres (see Table 6) 20-30% by weight of total wet paint of xylene

The model paints were prepared as described in Example 1.

In Table 6, the results of the tests are shown.

**TABLE 6**

| Model paint | Fibre sample | Fibre amount %-solids volume | DFT decrease after 33,100 Nautical miles (µm) |
|---|---|---|---|
| E | - | 0 | 35 |
| E | 4 | 6 | 40 |
| F | - | 0 | 15 |
| F | 4 | 6 | 20 |
| | | | DFT decrease after 20,000 Nautical miles (µm) |
| G | - | 0 | 65 |
| G | 4 | 5 | 68 |
| G | 11 | 5 | 63 |
| G | 14 | 5 | 55 |
| G | 16 | 5 | 41 |
| G | 18 | 5 | 65 |
| G | 25 | 5 | 64 |

### EXAMPLE 6

Paints formulated with rosin as main or sole binder component form a very rigid paint coat which shows a very pronounced tendency to crack when slightly bend. Several fibres were tested in the Mandrel Test for their effect on preventing cracking and improving film flexibility in rosin-containing model paints.

In Table 7, the results of the tests are shown.

**TABLE 7**

| Model paint | Fibre sample | Fibre amount %-solids volume | First mandrel diameter showing cracking (mm) |
|---|---|---|---|
| B1 | - | 0 | 25 |
| B1 | 4 | 5 | 8 |
| B1 | 21 | 5 | 10 |
| B1 | 28 | 5 | 8 |
| B1 | 30 | 5 | 6 |
| B1 | 44 | 5 | 5 |
| B1 | 48 | 5 | 8 |
| B1 | 51 | 5 | 8 |
| B1 | 57 | 5 | 5 |

### EXAMPLE 7

Paints formulated with rosin as main or sole binder component are mechanically weak and show a significant tendency to crack under impacts. Several fibres were tested in the Direct Impact Test for their effect on preventing cracking and improving film integrity in rosin-containing model paints.

In Table 8, the results of the tests are shown.

**TABLE 8**

| Model paint | Fibre sample | Fibre amount %-solids volume | Height at which failure occurs (cm) |
|---|---|---|---|
| B1 | - | 0 | 30 |
| B1 | 4 | 5 | 90 |
| B1 | 21 | 5 | 70 |
| B1 | 28 | 5 | 50 |
| B1 | 30 | 5 | 90 |
| B1 | 44 | 5 | 60 |
| B1 | 48 | 5 | 70 |
| B1 | 51 | 5 | 30 |
| B1 | 57 | 5 | 30 |

## Claims

1. A self-polishing marine antifouling paint comprising a binder system constituting 15-80% by solids volume of the paint, the binder system being present in the paint in such an amount and having such a composition that the paint, in the absence of any principle counteracting the mechanical deficiency,
when tested in the Laboratory Cracking Test herein results in a ranking of below 5; or
when tested in the Steel Panel Elongation Test herein shows micro or macro cracking when elongated 4 mm;
the paint further containing fibres in an amount of 0.1-30% by solids volume of the paint, the fibres, when incorporated in Model Paint A
60 parts by volume of natural gum rosin
10 parts by volume of cuprous oxide with an average particle size of 2-4 µm
26 parts by volume of zinc oxide with an average particle size of approximately 0.2 µm
4 parts by volume of thixotropic bentonite (Bentone 38 ex NL Chemicals)
4 parts by volume of fibres
20-30% by weight of total wet paint of xylene
result in a cracking ranking of the Model Paint A of at least 1.

2. A self-polishing marine antifouling paint according to claim 1, the paint further comprising at least one biologically active agent in an amount of 2-50% by solids volume of the paint.

3. A self-polishing marine antifouling paint according to any of the preceding claims, wherein the binder system comprises rosin or a rosin equivalent.

4. A self-polishing marine antifouling paint according to claim 3, wherein the amount of rosin or rosin equivalent is 15-80% by solids volume of the paint.

5. A self-polishing marine antifouling paint according to claim 4, wherein the amount of rosin or rosin equivalent is in the range of 20-70% by solids volume of the paint.

6. A self-polishing marine antifouling paint according to claim 5, wherein the amount of rosin or rosin equivalent is in the range of 20-60% by solids volume of the paint.

7. A self-polishing marine antifouling paint according to claim 6, wherein the amount of rosin or rosin equivalent is in the range of 25-60% by solids volume of the paint.

8. A self-polishing marine antifouling paint according to claim 3, wherein the amount of rosin or rosin equivalent exceeds 30% by solids volume of the binder system.

9. A self-polishing marine antifouling paint according to claim 8, wherein the amount of rosin or rosin equivalent exceeds 40% by solids volume of the binder system.

10. A self-polishing marine antifouling paint according to claim 9, wherein the amount of rosin or rosin equivalent exceeds 50% by solids volume of the binder system.

11. A self-polishing marine antifouling paint according to claim 10, wherein the amount of rosin or rosin equivalent exceeds 60% by solids volume of the binder system.

12. A self-polishing marine antifouling paint according to any of the preceding claims, wherein the fibres are inorganic fibres, natural or synthetic organic fibres, or mixtures thereof.

13. A self-polishing marine antifouling paint according to claim 12, wherein the fibres are inorganic fibres.

14. A self-polishing marine antifouling paint according to claim 12, wherein the fibres are natural or synthetic organic fibres.

15. A self-polishing marine antifouling paint according to any of the preceding claims, wherein the fibres have an average length of 5-2000 µm, an average thickness of 1-50 µm, and a ratio between the average length and the average thickness of at least 5.

16. A self-polishing marine antifouling paint according to claim 15, wherein the fibres have an average length of 10-500 µm and an average thickness of 1-25 µm with a ratio between the average length and the average thickness of at least 10.

17. A self-polishing marine antifouling paint according to claim 16, wherein the fibres have an average length of 40-300 µm and an average thickness of 2-10 µm with a ratio between the average length and the average thickness of at least 20.

18. A self-polishing marine antifouling paint according to claim 17, wherein the fibres have an average length of 80-200 µm and an average thickness of 2-20 µm with a ratio between the average length and the average thickness of at least 10.

19. A self-polishing marine antifouling paint according to claim 1, wherein the concentration of the fibres is in the range of 0.5-10% by solids volume of the paint.

20. A self-polishing marine antifouling paint according to claim 19, wherein the fibres, when incorporated in Model Paint A and tested in the Laboratory Cracking Test herein, results in a cracking ranking at least 3.

21. A self-polishing marine antifouling paint according to any of the preceding claims, wherein the binder system is present in the paint in an amount of 15-80%.

22. A self-polishing marine antifouling paint according to any of the preceding claims, which additionally comprises one or more pigment(s) and one or more solvent(s).

23. A self-polishing marine antifouling paint composition according to any of the preceding claims, comprising:
1) a binder system constituting 15-80% by solids volume of the paint composition;
2) fibres constituting 0.1-30% by solids volume of the paint composition;
3) one or more biologically active agent(s) constituting 2-50% by solids volume of the paint composition;
4) one or more pigment(s) constituting 10-60% of the solids volume of the paint composition;
5) and optionally one or more components selected from fillers, dyes, solvents, and additives.

## Patentansprüche

1. Selbstglättendes, fäulnisverhinderndes marines Anstrichmittel, das ein Bindersystem umfaßt, das 15-80% des Trockensubstanzvolumens des Anstrichmittels ausmacht, wobei das Bindersystem in dem Anstrichmittel in so einer Menge anwesend ist und so eine Zusammensetzung aufweist, daß das Anstrichmittel, bei Abwesenheit von jeglichen Bestandteilen, die dem mechanischen Mangel entgegenwirken,
bei Überprüfung im Labor-Aufspaltungs-Test einem Rang unter 5 einnimmt; oder
bei Überprüfung im Stahlfeld-Dehnungs-Test bei einer Dehnung von 4 mm eine Mikro- oder Makroaufspaltung zeigt;
das Anstrichmittel weiterhin Fasern in einer Menge von 0,1-30% des Trockensubstanzvolumens des Anstrichmittels enthält, wobei die Fasern, wenn einbezogen in Modell Farbe A,
60 Volumenteile von natürlichem Gummiharz
10 Volumenteile von Kupferoxid mit einer durchschnittlichen Teilchengröße von 2-4 µm
26 Volumenteile von Zinkoxid mit einer durchschnittlichen Teilchengröße von ungefähr 0,2 µm
4 Volumenteile von thixotropischem Bentonit (Bentone 38 ex NL Chemicals)
4 Volumenteile von Fasern
20-30 Gewichtsprozent des gesamten frischen Anstrichmittels von Xylen
in einer Rangfolge von Aufspaltungen des Modells Farbe A wenigstens Rang 1 einnehmen.

2. Selbstglättendes, fäulnisverhinderndes marines Anstrichmittel nach Anspruch 1, wobei das Anstrichmittel weiterhin mindestens ein biologisch aktives Mittel in einer Menge von 2-50% des Trockensubstanzvolumens des Anstrichmittels umfaßt.

3. Selbstglättendes, fäulnisverhinderndes marines Anstrichmittel nach einem der vorhergehenden Ansprüche, worin das Bindersystem Harz oder ein Harzäquivalent umfaßt.

4. Selbstglättendes, fäulnisverhinderndes marines Anstrichmittel nach Anspruch 3, worin die Menge an Harz oder Harzäquivalent 15-80% des Trockensubstanzvolumens des Anstrichmittels beträgt.

5. Selbstglättendes, fäulnisverhinderndes marines Anstrichmittel nach Anspruch 4, worin die Menge an Harz oder Harzäquivalent in einem Bereich von 20-70% des Trockensubstanzvolumens des Anstrichmittels liegt.

6. Selbstglättendes, fäulnisverhinderndes marines Anstrichmittel nach Anspruch 5, worin die Menge an Harz oder Harzäquivalent in einem Bereich von 20-60% des Trockensubstanzvolumens des Anstrichmittels liegt.

7. Selbstglättendes, fäulnisverhinderndes marines Anstrichmittel nach Anspruch 6, worin die Menge an Harz oder Harzäquivalent in einem Bereich von 25-60% des Trockensubstanzvolumens des Anstrichmittels liegt.

8. Selbstglättendes, fäulnisverhinderndes marines Anstrichmittel nach Anspruch 3, worin die Menge an Harz oder Harzäquivalent 30% des Trockensubstanzvolumens des Bindersystems überschreitet.

9. Selbstglättendes, fäulnisverhinderndes marines Anstrichmittel nach Anspruch 8, worin die Menge an Harz oder Harzäquivalent 40% des Trockensubstanzvolumens des Bindersystems überschreitet.

10. Selbstglättendes, fäulnisverhinderndes marines Anstrichmittel nach Anspruch 9, worin die Menge an Harz oder Harzäquivalent 50% des Trockensubstanzvolumens des Bindersystems überschreitet.

11. Selbstglättendes, fäulnisverhinderndes marines Anstrichmittel nach Anspruch 10, worin die Menge an Harz oder Harzäquivalent 60% des Trockensubstanzvolumens des Bindersystems überschreitet.

12. Selbstglättendes, fäulnisverhinderndes marines Anstrichmittel nach einem der vorhergehenden Ansprüche, worin die Fasern unorganische Fasern, natürliche oder synthetische organische Fasern oder Mischungen derselben sind.

13. Selbstglättendes, fäulnisverhinderndes marines Anstrichmittel nach Anspruch 12, worin die Fasern unorganische Fasern sind.

14. Selbstglättendes, fäulnisverhinderndes marines Anstrichmittel nach Anspruch 12, worin die Fasern natürliche oder synthetische organische Fasern sind.

15. Selbstglättendes, fäulnisverhinderndes marines Anstrichmittel nach einem der vorhergehenden Ansprüche, worin die Fasern eine durchschnittliche Länge von 5-2000 µm, eine durchschnittliche Stärke von 1-50 µm und ein Verhältnis zwischen der durchschnittlichen Länge und der durchschnittlichen Stärke von mindestens 5 aufweisen.

16. Selbstglättendes, fäulnisverhinderndes marines Anstrichmittel nach Anspruch 15, worin die Fasern eine durchschnittliche Länge von 10-500 µm und eine durchschnittliche Stärke von 1-25 µm mit einem Verhältnis zwischen der durchschnittlichen Länge und der durchschnittlichen Stärke von mindestens 10 aufweisen.

17. Selbstglättendes, fäulnisverhinderndes marines Anstrichmittel nach Anspruch 16, worin die Fasern eine durchschnittliche Länge von 40-300 µm und eine durchschnittliche Stärke von 2-10 µm mit einem Verhältnis zwischen der durchschnittlichen Länge und der durchschnittlichen Stärke von mindestens 20 aufweisen.

18. Selbstglättendes, fäulnisverhinderndes marines Anstrichmittel nach Anspruch 17, worin die Fasern eine durchschnittliche Länge von 80-200 µm und eine durchschnittliche Stärke von 2-20 µm mit einem Verhältnis zwischen der durchschnittlichen Länge und der durchschnittlichen Stärke von mindestens 10 aufweisen.

19. Selbstglättendes, fäulnisverhinderndes marines Anstrichmittel nach Anspruch 1, worin die Konzentration an Fasern im Bereich von 0,5-10% des Trockensubstanzvolumens des Anstrichmittel liegt.

20. Selbstglättendes, fäulnisverhinderndes marines Anstrichmittel nach Anspruch 19, worin die Fasern, wenn einbezogen in Model Farbe A und geprüft im Labor-Aufspaltungs-Test, in einer Rangfolge von Aufspaltungen wenigstens Rang 3 einnimmt.

21. Selbstglättendes, fäulnisverhinderndes marines Anstrichmittel nach einem der vorhergehenden Ansprüche, worin das Bindersystem in dem Anstrichmittel in einer Menge von 15-80% vorhanden ist.

22. Selbstglättendes, fäulnisverhinderndes marines Anstrichmittel nach einem der vorhergehenden Ansprüche, welches zusätzlich ein oder mehrere Pigment(e) und ein oder mehrere Solvent(e) umfaßt.

23. Selbstglättendes, fäulnisverhinderndes marines Anstrichmittel nach einem der vorhergehenden Ansprüche, umfassend:
1) ein Bindersystem, das 15-80% des Trockensubstanzvolumens des Anstrichmittels ausmacht;
2) Fasern, die 0,1-30% des Trockensubstanzvolumens des Anstrichmittels ausmachen;
3) ein oder mehrere biologisch aktive(s) Mittel, das/die 2-50% des Trockensubstanzvolumens des Anstrichmittels ausmacht/ausmachen;
4) ein oder mehrere Pigment(e), das/die 10-60% des Trockensubstanzvolumens des Anstrichmittels ausmacht/ausmachen;
5) und, fakultativ, eine oder mehrere Komponente(n), die aus Zusatzmitteln, Farbstoffen, Solventen und Additiven ausgewählt ist/sind.

## Revendications

1. Peinture marine anti-salissure auto-polissante comprenant un système liant constituant 15 à 80% en volume de solides de la peinture, le système liant étant présent dans la peinture en une quantité telle et ayant une composition telle que la peinture, en l'absence de tout principe contrecarrant la déficience mécanique,
• obtient un classement inférieur à 5 lorsqu'elle est testée dans l'Essai de Fissuration en Laboratoire (Laboratory Cracking Test); ou
• présente une micro- ou macro-fissuration lorsqu'elle est allongée de 4 mm lorsqu'on la teste dans le Test d'Allongement de Panneau d'Acier (Steel Panel Elongation Test);
• la peinture comprenant de plus des fibres en une quantité de 0,1 à 30% en volume de solides de la peinture, les fibres, lorsqu'incorporées dans le modèle de peinture A
◆ 60 parties en volume de colophane naturelle
◆ 10 parties en volume d'oxyde cuivreux ayant une granulométrie moyenne de 2 à 4 µm
◆ 26 parties en volume d'oxyde de zinc ayant une granulométrie moyenne d'approximativement 0,2 µm
◆ 4 parties en volume de bentonite thixotrope (Bentone 38 de chez NL Chemicals)
◆ 4 parties en volume de fibres
◆ 20% à 30% de xylène du poids total non-sèche de peinture
aboutissent à un classement du modèle de peinture A (Model Paint A) d'au moins 1.

2. Peinture marine anti-salissure auto-polissante selon la revendication 1, la peinture comprenant de plus au moins un agent biologiquement actif en une quantité de 2 à 50% en volume de solides de la peinture.

3. Peinture marine anti-salissure auto-polissante selon l'une quelconque des revendications précédentes, dans laquelle le système liant comprend de la colophane ou un équivalent de la colophane.

4. Peinture marine anti-salissure auto-polissante selon la revendication 3, dans laquelle la quantité de colophane ou d'équivalent de la colophane est de 15 à 80% en volume de solides de la peinture.

5. Peinture marine anti-salissure auto-polissante selon la revendication 4, dans laquelle la quantité de colophane ou d'équivalent de la colophane est de 20% à 70% en volume de solides de la peinture.

6. Peinture marine anti-salissure auto-polissante selon la revendication 5, dans laquelle la quantité de colophane ou d'équivalent de la colophane est de 20 à 60% en volume de solides de la peinture.

7. Peinture marine anti-salissure auto-polissante selon la revendication 6, dans laquelle la quantité de colophane ou d'équivalent de la colophane est de 25 à 60% en volume de solides de la peinture.

8. Peinture marine anti-salissure auto-polissante selon la revendication 3, dans laquelle la quantité de colophane ou d'équivalent de la colophane dépasse 30% en volume de solides du système liant.

9. Peinture marine anti-salissure auto-polissante selon la revendication 8, dans laquelle la quantité de colophane ou d'équivalent de la colophane dépasse 40% en volume de solides du système liant.

10. Peinture marine anti-salissure auto-polissante selon la revendication 9, dans laquelle la quantité de colophane ou d'équivalent de la colophane dépasse 50% en volume de solides du système liant.

11. Peinture marine anti-salissure auto-polissante selon la revendication 10, dans laquelle la quantité de colophane ou d'équivalent de la colophane dépasse 60% en volume de solides du système liant.

12. Peinture marine anti-salissure auto-polissante selon l'une quelconque des revendications précédentes, dans laquelle les fibres sont des fibres inorganiques, des fibres organiques naturelles ou synthétiques, ou leurs mélanges.

13. Peinture marine anti-salissure auto-polissante selon la revendication 12, dans laquelle les fibres sont des fibres inorganiques.

14. Peinture marine anti-salissure auto-polissante selon la revendication 12, dans laquelle les fibres sont des fibres organiques naturelles ou synthétiques.

15. Peinture marine anti-salissure auto-polissante selon l'une quelconque des revendications précédentes, dans laquelle les fibres ont une longueur moyenne de 5 à 2000 µm, une épaisseur moyenne de 1 à 50 µm, et un rapport entre la longueur moyenne et l'épaisseur moyenne d'au moins 5.

16. Peinture marine anti-salissure auto-polissante selon la revendication 15, dans laquelle les fibres ont une longueur moyenne de 10 à 500 µm et une épaisseur moyenne de 1 à 25 µm avec un rapport entre la longueur moyenne et l'épaisseur moyenne d'au moins 10.

17. Peinture marine anti-salissure auto-polissante selon la revendication 16, dans laquelle les fibres ont une longueur moyenne de 40 à 300 µm et une épaisseur moyenne de 2 à 10 µm avec un rapport entre la longueur moyenne et l'épaisseur moyenne d'au moins 20.

18. Peinture marine anti-salissure auto-polissante selon la revendication 17, dans laquelle les fibres ont une longueur moyenne de 80 à 200 µm et une épaisseur moyenne de 2 à 20 µm avec un rapport entre la longueur moyenne et l'épaisseur moyenne d'au moins 10.

19. Peinture marine anti-salissure auto-polissante selon la revendication 1, dans laquelle la concentration en fibre est dans la gamme de 0,5 à 10% en volume de solides de la peinture.

20. Peinture marine anti-salissure auto-polissante selon la revendication 19, dans laquelle les fibres, lorsqu'incorporées dans le modèle de peinture A et testées dans l'Essai de Fissuration en Laboratoire (Laboratory Cracking Test), aboutissent à un classement d'au moins 3.

21. Peinture marine anti-salissure auto-polissante selon l'une quelconque des revendications précédentes, dans laquelle le système liant est présent dans la peinture à raison de 15 à 80%.

22. Peinture marine anti-salissure auto-polissante selon l'une quelconque des revendications précédentes, qui comprend en plus un ou plusieurs pigments et un ou plusieurs solvants.

23. Composition de peinture marine anti-salissure auto-polissante selon l'une quelconque des revendications précédentes, comprenant:
1) un système liant constituant 15 à 80% en volume de solides de la composition de peinture;
2) des fibres constituant 0,1 à 30% en volume de solides de la composition de peinture;
3) un ou plusieurs agents biologiquement actifs constituant de 2 à 50% en volume de solides de la composition de peinture;
4) un ou plusieurs pigments constituant 10 à 60% en volume de solides de la composition de peinture;
5) et éventuellement un ou plusieurs composants choisis parmi les charges, les colorants, les solvants et les additifs.
